(19) Europäisches Patentamt
European Patent Office
Office européen des brevets

(11) EP 4 265 689 A1

(12) **EUROPEAN PATENT APPLICATION**
published in accordance with Art. 153(4) EPC

(43) Date of publication:
**25.10.2023 Bulletin 2023/43**

(21) Application number: **21909874.6**

(22) Date of filing: **04.10.2021**

(51) International Patent Classification (IPC):
***C09C 3/12*** (2006.01) ***H01L 23/373*** (2006.01)
***C08K 9/06*** (2006.01) ***C08L 101/00*** (2006.01)
***C09K 3/00*** (2006.01) ***C09K 5/14*** (2006.01)

(52) Cooperative Patent Classification (CPC):
**C08K 9/06; C08L 101/00; C09C 3/12; C09K 3/00; C09K 5/14; H01L 23/373**

(86) International application number:
**PCT/JP2021/036561**

(87) International publication number:
**WO 2022/137716 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2020 JP 2020211394**

(71) Applicant: **Resonac Corporation**
**Tokyo 105-8518 (JP)**

(72) Inventors:
- **MINORIKAWA, Naoki**
  **Tokyo 1058518 (JP)**
- **SATOH, Hikaru**
  **Tokyo 1058518 (JP)**
- **FUNAHASHI, Hajime**
  **Tokyo 1058518 (JP)**
- **KOBAYASHI, Ikue**
  **Tokyo 1058518 (JP)**
- **YUKUTAKE, Hajime**
  **Tokyo 1058518 (JP)**
- **IEMURA, Takeshi**
  **Tokyo 1058518 (JP)**

(74) Representative: **Strehl Schübel-Hopf & Partner**
**Maximilianstrasse 54**
**80538 München (DE)**

(54) **METHOD FOR PRODUCING SURFACE-TREATED THERMALLY CONDUCTIVE FILLER, AND THERMALLY CONDUCTIVE COMPOSITION**

(57) Provided is a method for producing a surface-treated thermally conductive filler, the method including treating the surface of the thermally conductive filler with an alkoxysilane having a specific structure by the chemical vapor deposition method.



Processed by Luminess, 75001 PARIS (FR)

## Description

Technical Field

The present invention relates to a method for producing a surface-treated thermally conductive filler and a thermally conductive composition containing the surface-treated thermally conductive filler.

Background Art

Conventionally, fillers have been added to polymers to impart various properties. When fillers are added to polymers, physical properties are degraded, and therefore the addition of surface-treated fillers is often performed in improvement measures. The same applies also to thermally conductive fillers, it is necessary to add thermally conductive fillers in an larger amount to polymers in order to improve the thermal conductivity, and surface treatment for high filling properties into polymers is becoming essential. Among others, a composition to which high thermal conductivity is given by filling a polymer with a large amount of thermally conductive filler is used as a material called interface, which is interposed between a heating element and a heat dissipator to transfer heat from an exothermic electronic device.

For example, Patent Literature 1 proposes a thermally conductive silicone rubber composition formed by dispersing a thermally conductive inorganic filler with its surface treated with a silane coupling agent in silicone rubber. For surface-treating the thermally conductive inorganic filler with a silane coupling agent, a mechanical treatment method such as the direct treatment method, the integral blending method, and the dry concentration method is used.

Further, a method for treating a silica gel surface and a method for treating a boehmite surface with a silane coupling agent by the chemical vapor deposition (CVD) method have been proposed (for example, see Non Patent Literatures 1 and 2). Further, Non Patent Literature 3 also proposes a method for forming a self-assembled monolayer (SAM) on polyester textiles by using a silane coupling agent by the CVD method.

Citation List

Patent Literature

PTL1: JP 11-209618 A

Non Patent Literature

NPL1: Development of fine particle adsorbents by surface treatment, Aichi Center for Industry and Science Technology, Research Report 2012

NPL2: Development research of biomass plastic composite materials having excellent thermal and mechanical properties (part 3), Gifu Prefectural Industrial Technology Center, Research Report No.7 (2013)

NPL3: Water-repellent processing of textiles by self-assembled monolayer (SAM) formation technology, Aichi Center for Industry and Science Technology, Research Report 2012

Summary of Invention

Technical Problem

Thermally conductive fillers include fillers subjected to water-resistant treatment; granule fillers obtained by coarsening fine fillers into spheres; fillers with sharp corners; and fillers with large particle sizes. When a thermally conductive filler is surface-treated, the thermally conductive filler may be destroyed due to physical impact by mixing of the thermally conductive filler or the like. At the same time, wear is caused by friction between the mixing device and the thermally conductive filler, and the thermally conductive filler may be darkened. This darkening also affects the color of the composition.

In Patent Literature 1 above, the thermally conductive inorganic filler is surface-treated by mechanical treatment, and accordingly, the thermally conductive inorganic filler is disadvantageously destroyed or darkened due to wear during the surface treatment of the thermally conductive inorganic filler.

In addition, the surface treatment with the silane coupling agent by the CVD method as described in Non Patent Literature 1 to 3 has not been sufficiently studied for thermally conductive fillers.

The present invention has been made in view of such circumstances, and an object thereof is to provide a

method for producing a surface-treated thermally conductive filler, the method that can yield a thermally conductive filler having excellent thermal conductivity with no change in shape or color, and a thermally conductive composition that has no darkening, a low viscosity, and excellent storability, and can form a cured product and a shaped body with high thermal conductivity, appropriate hardness, and low volatile content to be obtained.

Solution to Problem

As a result of diligent studies in order to solve the above problems, the inventors have found that the problems can be solved by the invention below.

Specifically, the present disclosure relates to:

[1] A method for producing a surface-treated thermally conductive filler, the method comprising: treating a surface of the thermally conductive filler with an alkoxysilane represented by formula (I) below by the chemical vapor deposition method:

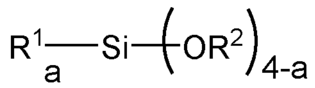 (I)

wherein $R^1$ is each independently an unsubstituted or substituted organic group, $R^2$ is each independently an alkyl group having 1 to 4 carbon atoms, in the case where there are a plurality of $R^1$ or $R^2$, the plurality of $R^1$ or the plurality of $R^2$ are the same or different, and a represents an integer of 1 to 3.

[2] The method for producing a surface-treated thermally conductive filler according to [1] above, wherein the organic group $R^1$ is an alkyl group having 1 to 12 carbon atoms, an alkenyl group having 2 to 18 carbon atoms, or an aryl group having 6 to 14 carbon atoms.

[3] The method for producing a surface-treated thermally conductive filler according to [1] or [2] above, wherein the thermally conductive filler is at least one selected from the group consisting of silicon-containing oxide-coated nitride, metal oxide particles, and ceramic powder granules.

[4] The method for producing a surface-treated thermally conductive filler according to any one of [1] to [3], wherein the chemical vapor deposition method is performed at a temperature of 80°C or more and 200°C or less.

[5] A thermally conductive composition comprising a polymer component and a thermally conductive filler surface-treated with an alkoxysilane represented by formula (I) below by the chemical vapor deposition method:

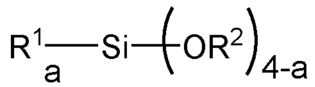 (I)

wherein $R^1$ is each independently an unsubstituted or substituted organic group, $R^2$ is each independently an alkyl group having 1 to 4 carbon atoms, in the case where there are a plurality of $R^1$ or $R^2$, then the plurality of $R^1$ or the plurality of $R^2$ are the same or different, and a represents an integer of 1 to 3.

[6] The thermally conductive composition according to [5] above, wherein the organic group $R^1$ is an alkyl group having 1 to 12 carbon atoms, an alkenyl group having 2 to 18 carbon atoms, or an aryl group having 6 to 14 carbon atoms.

[7] The thermally conductive composition according to [5] or [6] above, wherein the thermally conductive filler is at least one selected from the group consisting of silicon-containing oxide-coated nitride, metal oxide particles, and ceramic powder granules.

[8] The thermally conductive composition according to [7] above, wherein the thermally conductive filler is silicon-containing oxide-coated nitride.

[9] The thermally conductive composition according to any one of [5] to [8] above, wherein the polymer component is at least one selected from the group consisting of silicone rubber, acrylic rubber, polyurethane rubber, epoxy resin, polyimide, butyl rubber, silicone-modified acrylic resin, silicone-modified polyurethane, silicone-modified epoxy resin, and silicone-modified polyimide.

[10] The thermally conductive composition according to any one of [5] to [9] above, wherein the thermally conductive composition has a content of the polymer component of 1 mass% or more and 80 mass% or less, and a content of the thermally conductive filler of 20 mass% or more and 99 mass% or less, with respect to the total amount of the thermally conductive composition.

[11] A cured product of the thermally conductive composition according to any one of [5] to [10] above.

[12] A shaped body consisting of the thermally conductive composition according to any one of [5] to [10] above.

[13] The thermally conductive composition according to any one of [5] to [10] above, wherein a cured product of the thermally conductive composition after storage at room temperature (23°C ± 2°C) for 7 days has a hardness decrement of 9.0% or less from the initial hardness of the cured product of the thermally conductive composition.

Advantageous Effects of Invention

The present invention can provide a method for producing a surface-treated thermally conductive filler, the method that can yield a thermally conductive filler having excellent thermal conductivity with no change in shape or color, and a thermally conductive composition that has no darkening, low viscosity, and excellent storability, and can form a cured product and a shaped body with, high thermal conductivity, appropriate hardness, and low volatile content.

Description of Embodiments

Hereinafter, the present invention will be described in detail by way of one embodiment.

<Method for producing surface-treated thermally conductive filler>

In this embodiment, a surface-treated thermally conductive filler is produced by treating the surface of a thermally conductive filler with an alkoxysilane represented by formula (I) below by a surface treatment method by the chemical vapor deposition method:

$$R^1_a - Si - (OR^2)_{4-a} \quad (I)$$

wherein $R^1$ is each independently an unsubstituted or substituted organic group, $R^2$ is each independently an alkyl group having 1 to 4 carbon atoms, in the case where there are a plurality of $R^1$ or $R^2$, the plurality of $R^1$ or the plurality of $R^2$ may be the same or different, and a is an integer of 1 to 3.

Use of the chemical vapor deposition method as a surface treatment method of the thermally conductive filler allows the surface of the thermally conductive filler to be treated with no change in shape or color of the thermally conductive filler. Further, it can suppress the reduction in thermal conductivity due to treating the surface of the thermally conductive filler.

[Thermally conductive filler]

The surface treatment method of this embodiment can be preferably used for thermally conductive fillers that tend to deteriorate the initial performance by a mechanical treatment method such as the direct treatment method, the integral blending method, and the dry concentration method. Examples of such thermally conductive fillers include, but not limited to, nitrides having a silicon-containing oxide film on a surface (hereinafter referred to also as silicon-containing oxide-coated nitrides), metal oxide particles, and ceramic powder granules. The thermally conductive fillers may be used singly, or two or more of them may be used as a mixture.

Herein, a "granule" means a single grain formed by agglomerating and sintering powder.

In such a silicon-containing oxide-coated nitride, the silicon-containing oxide film tends to be scraped off from the surface of the nitride when dry-mixed. When the particle size of the metal oxide particles is large, the particles are likely to be worn by friction with the mixing device and darkened. Further, ceramic powder granules disadvantageously tend to crumble when a physical impact is applied thereto. These problems can be solved by surface-treating the thermally conductive filler by the surface treatment method of this embodiment.

(Silicon-containing oxide-coated nitride)

Examples of the nitride of the silicon-containing oxide-coated nitride include metal nitrides. Examples of the metal nitrides include aluminum nitride, and known products such as commercially available products can be used. Aluminum nitride may be obtained by any method such as the direct nitriding method, in which metal aluminum powder and nitrogen or ammonia are directly reacted, and the reduction nitriding method, in which alumina is subjected to carbothermic reduction and also simultaneously heated in a nitrogen or ammonia atmosphere to cause the nitriding reaction.

In the description below, aluminum nitride will be cited as an example of the nitride.

The shape of the aluminum nitride is not specifically limited, and examples thereof include amorphous (crushed),

spherical, ellipsoidal, and platy (flaky) shapes.

Further, the particle size at a cumulative volume of 50%, D50, in the particle size distribution of aluminum nitride by the laser diffraction light-scattering method is preferably 0.2 μm or more and 200 μm or less, more preferably 1.0 μm or more and 100 μm or less, further preferably 1.0 μm or more and 90 μm or less.

The specific surface area of aluminum nitride determined by the BET method is preferably 0.07 $m^2/g$ or more and 3.5 $m^2/g$ or less, more preferably 0.07 $m^2/g$ or more and 3.2 $m^2/g$ or less, further preferably 0.07 $m^2/g$ or more and 3.0 $m^2/g$ or less, in view of the filling properties into the polymer.

The specific surface area determined by the BET method can be measured from the single-point BET nitrogen adsorption by the gas flow method. As an evaluation device, Macsorb HM model-1210, available from Mountech Co., Ltd., can be used.

Aluminum nitride preferably has a silicon-containing oxide film on its surface for improving the moisture resistance. Further, since aluminum nitride has a silicon-containing oxide film on its surface, the water resistance is improved, and it is less likely to inhibit the curing of the polymer component by suppressing generation of ammonia due to hydrolysis. The silicon-containing oxide film may partially or entirely cover the surface of the aluminum nitride, and preferably covers the entire surface of the aluminum nitride.

Since aluminum nitride has excellent thermal conductivity, aluminum nitride having a silicon-containing oxide film on its surface (hereinafter also referred to as silicon-containing oxide-coated aluminum nitride) also has excellent thermal conductivity.

Examples of the "silicon-containing oxide" of the silicon-containing oxide film and silicon-containing oxide-coated aluminum nitride particles include an oxide containing silica and an oxide containing silicon and aluminum.

In the silicon-containing oxide-coated aluminum nitride, the silicon-containing oxide film covering the surface of the aluminum nitride has a coverage of preferably 70% or more and 100% or less, more preferably 70% or more and 95% or less, further preferably 72% or more and 90% or less, particularly preferably 74% or more and 85% or less, as determined by LEIS analysis. When the coverage is 70% or more and 100% or less, the moisture resistance is more excellent. Further, when it is over 95%, the thermal conductivity may decrease in some cases.

The coverage (%) with the silicon-containing oxide film ($SiO_2$) on the surface of the aluminum nitride can be determined from the following formula through LEIS (Low Energy Ion Scattering) analysis.

$$(S_{Al}\,(AlN) - S_{Al}\,(AlN + SiO_2))/S_{Al}\,(AlN) \times 100$$

wherein, $S_{Al}$ (AlN) is the area of the Al peak of the aluminum nitride, and $S_{Al}$ (AlN + $SiO_2$) is the area of the Al peak of the silicon-containing oxide-coated aluminum nitride. The area of the Al peak can be determined from analysis by low energy ion scattering (LEIS), which is a measurement method using an ion source and a rare gas as probes. LEIS is an analysis method in which rare gas of several keV is used as incident ions and is an evaluation method that enables compositional analysis of the outermost surface (reference literature: The TRC News 201610-04 (October 2016)).

For example, the method for forming a silicon-containing oxide film on the surface of the aluminum nitride may be a method comprising the first step of covering the surface of the aluminum nitride with a siloxane compound having a structure represented by formula (1) below, and the second step of heating the aluminum nitride covered with the siloxane compound at a temperature of 300°C or more and 900°C or less.

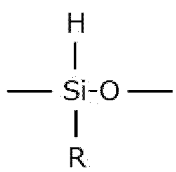 · · · (1)

In formula (1), R is an alkyl group having 4 or less carbon atoms.

The structure represented by formula (1) is a hydrogen siloxane structural unit having a Si-H bond. In formula (1), R is an alkyl group having 4 or less carbon atoms, that is, a methyl group, an ethyl group, a propyl group, or a butyl group, and is preferably a methyl group, an ethyl group, an isopropyl group, or a t-butyl group, more preferably a methyl group.

The siloxane compound is preferably an oligomer or a polymer containing the structure represented by formula (1) as a repeating unit. The siloxane compound may be linear, branched, or cyclic. The weight-average molecular weight of the siloxane compound is preferably 100 to 2000, more preferably 150 to 1000, further preferably 180 to 500, for ease of formation of a silicon-containing oxide film with uniform thickness. The weight-average molecular weight is a value in terms of polystyrene by gel permeation chromatography (GPC).

The siloxane compound used is preferably a compound represented by formula (2) below and/or a compound represented by formula (3) below.

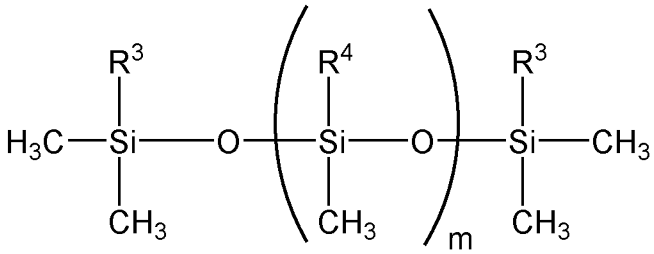

... (2)

In formula (2), $R^3$ and $R^4$ are each independently a hydrogen atom or a methyl group, at least any one of $R^3$ and $R^4$ is a hydrogen atom, and m is an integer of 0 to 10 and is preferably 1 to 5, more preferably 1, in view of the availability from the market and the boiling point.

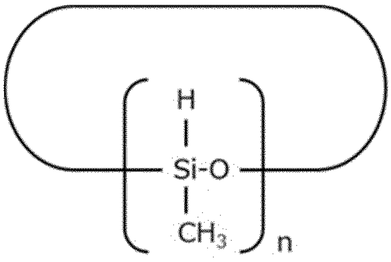

... (3)

In formula (3), n is an integer of 3 to 6 and is preferably 3 to 5, more preferably 4.

The siloxane compound is particularly preferably a cyclic hydrogen siloxane oligomer with n being 4 in formula (3) in view of the ease of formation of a good silicon-containing oxide film.

In the first step, the surface of the aluminum nitride is covered with a siloxane compound having the structure represented by formula (1).

In the first step, the method therefor is not particularly limited, as long as the surface of the aluminum nitride can be covered with a siloxane compound having the structure represented by formula (1). For example, the method for the first step may be a dry mixing method in which the siloxane compound is added by spraying or the like under stirring aluminum nitride as a raw material using a general powder mixing device, followed by dry mixing for coating.

Examples of the powder mixing device include ribbon blenders having mixing impellers such as a Henschel mixer (available from NIPPON COKE & ENGINEERING CO., LTD.), a vessel rotating V-blender, and a double cone blender, screw blenders, closed rotary kilns, and stirring with a stirrer in a closed container using a magnetic coupling. The temperature condition is not specifically limited but is preferably 10°C or more and 200°C or less, more preferably 20°C or more and 150°C or less, further preferably 40°C or more and 100°C or less.

It is also possible to use the vapor-phase adsorption method in which the vapor of the siloxane compound alone or a mixed gas with an inert gas such as nitrogen gas is deposited or vapor-deposited on the surface of aluminum nitride that are left standing. The temperature condition is not specifically limited but is preferably 10°C or more and 200°C or less, more preferably 20°C or more and 150°C or less, further preferably 40°C or more and 100°C or less. Further, if necessary, the inside of the system can be pressurized or decompressed. As a device that can be used in this case, a closed device that can easily replace the gas inside the system is preferable, and for example, a glass container, a desiccator, a CVD device or the like can be used.

The amount of the siloxane compound to be used in the first step is not specifically limited. In the aluminum nitride covered with the siloxane compound to be obtained in the first step, the amount of the siloxane compound coating is preferably 0.1 mg or more and 1.0 mg or less, more preferably 0.2 mg or more and 0.8 mg or less, further preferably 0.3 mg or more and 0.6 mg or less, per 1 $m^2$ of the surface area calculated from the specific surface area ($m^2/g$) of aluminum nitride determined by the BET method. When the amount of the siloxane compound coating is within such a range, aluminum nitride having a silicon-containing oxide film with uniform thickness can be obtained.

The amount of the siloxane compound coating per 1 $m^2$ of the surface area of calculated from the specific surface area ($m^2/g$) of aluminum nitride determined by the BET method can be determined by dividing the difference in the mass of the aluminum nitride between before and after the aluminum nitride is coated with the siloxane compound by the surface area ($m^2$) calculated from the specific surface area ($m^2/g$) of the aluminum nitride determined by the BET

method.

In the second step, the aluminum nitride covered with the siloxane compound obtained in the first step is heated at a temperature of 300°C or more and 800°C or less, whereby, a silicon-containing oxide film can be formed on the surface of aluminum nitride. The heating temperature is more preferably 400°C or more, further preferably 500°C or more.

The heating time is preferably 30 minutes or more and 6 hours or less, more preferably 45 minutes or more and 4 hours or less, further preferably 1 hour or more and 2 hours or less, for ensuring a sufficient reaction time and efficiently forming a good silicon-containing oxide film. The atmosphere during the heat treatment is preferably an atmosphere containing oxygen gas, for example, the atmosphere (in-air).

The silicon-containing oxide-coated aluminum nitride particles after the heat treatment in the second step may be in a partially fused state, but in such a case, it is de-agglomerated, for example, using a general grinder such as a roller mill, a hammer mill, a jet mill, and a ball mill, so that a silicon-containing oxide-coated aluminum nitride without sticking and agglomeration can be obtained.

Further, after the completion of the second step, the first step and the second step may be further sequentially performed. That is, the process of sequentially performing the first step and the second step may be repeated.

(Metal oxide particles)

For the lower limit the average particle size, the metal oxide particles to be used in this embodiment may have an average particle size of 20 μm or more or 40 μm or more. When the metal oxide particles having an average particle size of 20 μm or more are subjected to surface treatment by a dry process, they are easily worn and darkened due to friction with a mixing device, which is problematic. According to the surface treatment method of this embodiment, there is no need to stir the thermally conductive filler, and thus, such a problem does not arise, even if the average particle size of the metal oxide particles is 20 μm or more. For the upper limit, the average particle size of the metal oxide particles is preferably 120 μm, more preferably 100 μm, in view of the thickness of the product.

Herein, the "average particle size" is the volume-weighted average particle size, which can be determined from the particle size (50% particle size D50) at which cumulative volume is 50% in the particle size distribution measured using a laser diffraction particle size distribution analyzer (for example, product name: MT3300EXII, available from MicrotracBEL Corp.).

Examples of the metal oxide include zinc oxide, alumina, magnesium oxide, silicon dioxide, and iron oxide. Among them, alumina is preferable for high thermal conductivity. Examples of the alumina include spherical alumina, crushed alumina, and fused alumina. As the crystal form of alumina, α-alumina ($\alpha$-$Al_2O_3$), which is excellent in heat conduction, is preferable.

The hardness of the thermally conductive filler varies. In particular, or alumina has a Mohs hardness of 9, which is the second hardest after diamond. Therefore, when powder containing α-alumina is stirred, the inner surface of the container is worn. In contrast, the surface treatment method of this embodiment does not require stirring of the thermally conductive filler, and thus it is useful for surface treatment of powder containing α-alumina.

Known alumina such as commercially available products can be used. Known alumina such as commercially available products has a wide variety of types in terms of particle sizes and shapes, and inexpensive, and the most suitable product can be selected.

Alumina may be produced by any method, such as the Bayer process, the thermal decomposition method of ammonium alum, the thermal decomposition method of ammonium aluminum carbonate, the underwater spark discharge method of aluminum, the gas-phase oxidation method, and the hydrolysis method of aluminum alkoxide. In particular, alumina obtained by the Bayer process is inexpensive and preferable.

The shape of alumina is not specifically limited, and examples thereof include amorphous (crushed), spherical, rounded, and polyhedral shapes.

The specific surface area determined by the BET method of alumina is preferably 0.06 $m^2/g$ or more and 0.7 $m^2/g$ or less, more preferably 0.07 $m^2/g$ or more and 0.6 $m^2/g$ or less, further preferably 0.08 $m^2/g$ or more and 0.5 $m^2/g$ or less, in view of the filling properties into the polymer.

Powder of metal oxide having an average particle size of less than 20 μm (n) (hereinafter also referred to simply as metal oxide powder) may be used in combination with metal oxide particles (m) as the thermally conductive filler. In the case of using metal oxide powder too, the amount thereof to be mixed is preferably such that [m:n] = 10:90 to 90:10, more preferably 20:80 to 80:20, further preferably 30:70 to 70:30, in a mass ratio. When the amount of the metal oxide powder to be mixed falls within such a range, a composition that is not dry and is coherent can be obtained.

The average particle size of the metal oxide powder is preferably 0.1 μm or more and less than 20 μm, more preferably 0.3 μm or more and 15 μm or less, further preferably 0.5 μm or more and 10 μm or less, for combining with metal oxide particles.

(Ceramic powder granules)

Examples of the ceramic powder granules (however, excluding alumina) include cubic boron nitride (cBN), hexagonal boron nitride (hBN), and aluminum nitride. The average particle size of the ceramic powder granules is preferably 10 $\mu$m or more and 250 $\mu$m or less, more preferably 20 $\mu$m or more and 120 $\mu$m or less, further preferably 30 $\mu$m or more and 100 $\mu$m or less. When the average particle size of the ceramic powder granules falls within such a range, the thickness of the product can be reduced, and the distance between the heating element and the heat dissipator (Bond Line Thickness; BLT) also can be reduced to reduce the heat resistance.
The ceramic powder granules can be obtained, for example, by slurrying powdered ceramics, spray-drying the slurry into spheres, and then sintering the spheres.

[Alkoxysilane represented by formula (I)]

In the surface treatment method of this embodiment, alkoxysilane represented by formula (I) below is used.

$$R^1_a\text{—Si}\left(OR^2\right)_{4-a} \quad \text{(I)}$$

In the formula, $R^1$ is each independently an unsubstituted or substituted organic group, $R^2$ is each independently an alkyl group having 1 to 4 carbon atoms, in the case where there are a plurality of $R^1$ or $R^2$, then the plurality of $R^1$ or the plurality of $R^2$ may be the same or different, and a is an integer of 1 to 3.
The organic group $R^1$ may be unsubstituted or may have a substituent.
Examples of the organic group include an alkyl group, an alkenyl group, and an aryl group.
The alkyl group is preferably an alkyl group having 1 to 12 carbon atoms, more preferably an alkyl group having 3 to 12 carbon atoms. Examples of the alkyl group include a methyl group, an ethyl group, a n-propyl group, an isopropyl group, a n-butyl group, an isobutyl group, a tert-butyl group, a pentyl group, a hexyl group, an octyl group, and a decyl group. Among them, a n-propyl group, an isopropyl group, a n-butyl group, an isobutyl group, a tert-butyl group, a hexyl group, an octyl group, and a decyl group are preferable, in view of the compatibility with the polymer and the boiling point.
Examples of the substituent that the alkyl group may have include a halogen atom, an epoxy group, an isocyanato group, a hydroxyl group, an amino group, a carboxy group, an acyl group, and an alkoxy group. The alkyl group may have one type or two or more types of these substituents.
The alkenyl group is preferably an alkenyl group having 2 to 18 carbon atoms, more preferably an alkenyl group having 2 to 8 carbon atoms. Examples of the alkenyl group include a vinyl group, an allyl group, a 1-propenyl group, an isopropenyl group, a 1-butenyl group, a 2-butenyl group, a 1-pentenyl group, a 1-hexenyl group, and a 1-octenyl group. Among them, a vinyl group is preferable in view of the availability.
Examples of the substituent that the alkenyl group may have include a halogen atom, an epoxy group, an isocyanato group, a hydroxyl group, an amino group, a carboxy group, an acyl group, and an alkoxy group. The alkenyl group may have one type or two or more types of these substituents.
The aryl group is preferably an aryl group having 6 to 14 carbon atoms such as a phenyl group, a biphenylyl group, a naphthyl group, a fluorenyl group, an anthracenyl group, a p-tolyl group, a p-vinyl phenyl group, and a p-chloromethylphenyl group. Among them, a phenyl group is preferable in view of the availability and the compatibility with the polymer.
Examples of the substituent that the aryl group may have include a halogen atom, an epoxy group, an isocyanato group, a hydroxyl group, an amino group, a carboxy group, an acyl group, and an alkoxy group. The aryl group may have one type or two or more types of these substituents.
$R^2$ above is an alkyl group having 1 to 4 carbon atoms such as a methyl group, an ethyl group, a n-propyl group, an isopropyl group, a n-butyl group, isobutyl group, and a tert-butyl group. Among them, a methyl group, an ethyl group, a n-propyl group, and an isopropyl group are preferable, more preferably a methyl group, in view of the boiling point and the hydrolyzability.
The letter a is an integer of 1 to 3, preferably 1, in view of the hydrolyzability of the alkoxy group.
Examples of the alkoxysilane represented by formula (I) specifically include propyltrimethoxysilane, butyltrimethoxysilane, isobutyltrimethoxysilane, hexyltrimethoxysilane, octyltrimethoxysilane, and decyltrimethoxysilane. Among them, propyltrimethoxysilane, butyltrimethoxysilane, isobutyltrimethoxysilane, octyltrimethoxysilane, decyltrimethoxysilane are preferable, in view of the compatibility with the polymer and the boiling point, more preferably decyltrimethoxysilane, in view of the hydrolyzability of the alkoxy group and the compatibility with the polymer.
The alkoxysilanes may be used singly or in combination of two or more.
The alkoxysilane represented by formula (I) is available as a commercial product. Examples thereof include

"KBM-3103C", available from Shin-Etsu Chemical Co., Ltd., as decyltrimethoxysilane, "Dynasylane OCTMO", available from EVONIK JAPAN CO., LTD., as octyltrimethoxysilane, "KBM-3063", available from Shin-Etsu Chemical Co., Ltd., as hexyltrimethoxysilane.

When the alkoxysilane represented by formula (I) has a boiling point of 200°C, such an alkoxysilane is preferable for vapor deposition. The ease of vaporization of the alkoxysilane represented by formula (I) is roughly estimated by placing the alkoxysilane represented by formula (I) in a watch glass at room temperature (23°C) and blowing air thereto with a paper fan or the like. At that time, when the mass of the alkoxysilane represented by formula (I) changes with time, it can be determined that the alkoxysilane is easily vaporized.

[Surface treatment by chemical vapor deposition method]

The surface of the thermally conductive filler is treated with the alkoxysilane represented by formula (I) by the chemical vapor deposition method.

The chemical vapor deposition method is performed by putting a container containing the alkoxysilane represented by formula (I) and a container containing the thermally conductive filler left standing into a heating device such as an oven and heating them at a predetermined temperature. The alkoxysilane represented by formula (I) vaporizes by heating and diffuses into the thermally conductive filler, and the thermally conductive filler adsorbs it to chemically react therewith, so that the surface of the thermally conductive filler can be treated. Alternatively, the alkoxysilane represented by formula (I) is heated, and introduced with an inert gas as a carrier gas to the thermally conductive filler so as to diffuse into the thermally conductive filler, and the thermally conductive filler adsorbs it to and chemically react therewith, so that the surface of the thermally conductive filler can be treated. In the chemical vapor deposition method, since there is no need to stir the thermally conductive filler, the thermally conductive filler is not broken or worn, and accordingly, a thermally conductive filler with high thermal conductivity and no change in shape or color can be obtained.

The thermally conductive filler is left standing in a container. The alkoxysilane represented by formula (I) vaporized diffuses not only on the surface of the thermally conductive filler in the container but also into the inside. Since the alkoxysilane represented by formula (I) vaporized has good diffusivity and good penetrability, the thermally conductive filler is uniformly treated even if a large amount of the thermally conductive filler is put into the container. It is thus possible to perform the treatment on a large amount, and it is also possible to simultaneously treat a wide variety of materials in small amounts. The byproduct is alcohol, which can be removed by heating, and there is no need of performing additional steps such as drying. Further, since the resulting product is not wet with a solvent or the like, the product can be packed immediately and are easy to release.

The chemical vapor deposition method is preferably performed at a temperature of 80°C or more and 200°C or less for 2 hours or more and 10 hours or less, more preferably at a temperature of 100°C or more and 200°C or less for 3 hours or more and 10 hours or less, further preferably at a temperature of 120°C or more and 180°C or less for 4 hours or more and 8 hours or less.

The amount of the alkoxysilane represented by formula (I) to be used is preferably 0.1 parts by mass or more and 3.0 parts by mass or less, more preferably 0.2 parts by mass or more and 2.0 parts by mass or less, further preferably 0.3 parts by mass or more and 1.0 part by mass or less, with respect to 100 parts by mass of the thermally conductive filler, for covering the surface of the thermally conductive filler.

<Thermally conductive composition>

The thermally conductive composition of this embodiment comprises a polymer component, and a thermally conductive filler surface-treated with an alkoxysilane represented by formula (I) by the chemical vapor deposition method.

[Polymer component]

The polymer component to be used in this embodiment is not specifically limited, and examples thereof include thermosetting resins, thermoplastic resins, elastomers, and oils.

Examples of the thermosetting resins include epoxy resins, phenolic resins, unsaturated polyester resins, melamine resins, urea resins, polyimides, and polyurethanes.

Examples of the thermoplastic resins include polyolefins such as polyethylene and polypropylene; polyesters, nylons, ABS resins, methacryl resins, acrylic resins, polyphenylene sulfides, fluorine resins, polysulfone, polyetherimide, polyether sulfone, polyether ketone, liquid crystal polyester, thermoplastic polyimide, polylactic acid, and polycarbonate.

The thermosetting resins and the thermoplastic resins may be modified with silicone.

Examples of the elastomers include natural rubber, isoprene rubber, butadiene rubber, 1,2-polybutadiene, styrene-butadiene, chloroprene rubber, nitrile rubber, butyl rubber, ethylene-propylene rubber (EPM, EPDM), chlorosulfonated polyethylene, acrylic rubber, epichlorohydrin rubber, polysulfide rubber, silicone rubber, fluororubber, and polyurethane rubber.

Examples of the oils include low molecular weight poly-$\alpha$-olefins, low molecular weight polybutenes, silicone oils, and fluorine oils.

Among them, preferred is at least one selected from the group consisting of silicone rubber, acrylic rubber, polyurethane rubber, epoxy resin, polyimide, butyl rubber, silicone-modified acrylic resins, silicone-modified polyurethanes, silicone-modified epoxy resins, and silicone-modified polyimides, and silicone rubber is more preferable, in view of the product diversity and the heat resistance.

These may be used singly or in combination of two or more.

The content of the polymer component is preferably 1 mass% or more and 80 mass% or less, more preferably 2 mass% or more and 75 mass% or less, further preferably 2 mass% or more and 72 mass% or less, with respect to the total amount of the thermally conductive composition of this embodiment. When the content of the polymer component is 1 mass% or more, a composition with appropriate hardness and high thermal conductivity can be obtained. When it is 80 mass% or less, a liquid composition with appropriate thermal conductivity can be obtained.

[Thermally conductive filler]

The thermally conductive filler to be used in this embodiment is obtained by surface treatment with the alkoxysilane represented by formula (I) by the chemical vapor deposition method.

As the thermally conductive filler, silicon-containing oxide-coated nitrides, metal oxide particles, and ceramic powder granules are preferably used. Among them, silicon-containing oxide-coated nitrides are preferable, and silicon-containing oxide-coated aluminum nitrides are more preferable, in view of the filling properties into the polymer and high thermal conductivity of the filler itself.

As the alkoxysilane represented by formula (I), those described in the section <Method for producing surface-treated thermally conductive filler> can be used. The surface treatment of the thermally conductive filler is as described in the section [Surface treatment by chemical vapor deposition method].

Use of the thermally conductive filler surface-treated by the chemical vapor deposition method as the thermally conductive filler can minimize the deterioration of the initial performance of the thermally conductive filler due to stirring when filled into the polymer component. Although the friction between the thermally conductive fillers occurs during stirring, the presence of the polymer component in the periphery of the thermally conductive filler can suppress the deterioration in performance of the thermally conductive filler due to the polymer component acting as a lubricant.

The content of the thermally conductive filler is preferably 20 mass% or more and 99 mass% or less, more preferably 25 mass% or more and 98 mass% or less, further preferably 28 mass% or more and 98 mass% or less, with respect to the total amount of the thermally conductive composition of this embodiment. When the content of the thermally conductive filler is 20 mass% or more, high thermal conductivity can be achieved. When it is 98 mass% or less, a composition with elasticity can be obtained.

The thermally conductive composition of this embodiment may comprise another thermally conductive filler (a), in addition to the thermally conductive filler surface-treated with the alkoxysilane represented by formula (I) by the chemical vapor deposition method (hereinafter also referred to simply as thermally conductive filler (A)), in view of the reactivity with the hydroxyl group of the filler and the volatility.

Examples of the thermally conductive filler (a) include thermally conductive fillers with small-particle size and metal oxides with low Mohs hardness. The average particle size of the thermally conductive filler (a) is preferably less than 20 $\mu$m, more preferably 15 $\mu$m or less. The Mohs hardness of the thermally conductive filler (a) is preferably 6 or less, such as aluminum hydroxide, boron nitride, and zinc oxide.

The thermally conductive filler (a) may be surface-treated. Any of treatment methods such as a dry process, a wet process, and an integral blending method may be used. Examples of the surface-treating agent include not only silane coupling agents that can be used in the chemical vapor deposition method but also titanium coupling agents, aluminum coupling agents, phosphate esters, fatty acids, fatty acid esters, silicone oils, fluorine oils, dispersants, and surfactants, and any of them may be used, as long as it does not affect the cured form and the physical properties.

In the case where the thermally conductive composition of this embodiment comprises the thermally conductive filler (a), the content thereof is preferably 1000 parts by mass or less, more preferably 800 parts by mass or less, further preferably 700 parts by mass or less, with respect to a total of 100 parts by mass of the polymer component and the thermally conductive filler (A).

[Other components]

In addition to the aforementioned components, the thermally conductive composition of this embodiment can contain additives such as dispersants, flexibility-imparting agents, inorganic ion scavengers, pigments, dyes, diluents, flame retardants, and reaction accelerators, as required, as long as the effects of the present invention are not inhibited.

In the case where the thermally conductive composition of this embodiment does not contain the thermally conductive filler (a), the total content of the polymer component and the thermally conductive filler (A) is preferably 90 mass% or more and 100 mass% or less, more preferably 95 mass% or more and 100 mass% or less, with respect to the total amount of the thermally conductive composition. In the case where the thermally conductive composition of this embodiment contains the thermally conductive filler (a), the total content of the polymer component and the thermally conductive filler (A) is preferably 60 mass% or more and 95 mass% or less, more preferably 70 mass% or more and 90 mass% or less, with respect to the total amount of the thermally conductive composition.

The thermally conductive composition of this embodiment can be obtained by putting a polymer component, a thermally conductive filler surface-treated with the alkoxysilane represented by formula (I) by the chemical vapor deposition method, and other additives into a stirring device, followed by stirring and kneading. The stirring device is not specifically limited, and examples thereof include a double roll, a kneader, a planetary mixer, a high-speed mixer, and a rotation/revolution stirrer.

The thermally conductive composition of this embodiment has a viscosity of preferably 80 Pa s or more and 10000 Pa s or less, more preferably 100 Pa s or more and 10000 Pa s or less, further preferably 150 Pa s or more and 5000 Pa s or less, even more preferably 200 Pa s or more and 2500a s or less.

The viscosity can be measured using a flow viscometer by a method according to JIS K7210:2014, specifically, by the method described in Examples.

The thermally conductive composition of this embodiment has a consistency of preferably 30 or more and 450 or less, more preferably 40 or more and 420 or less, further preferably 50 or more and 390 or less.

Herein, the consistency is an index of the flexibility of the thermally conductive composition, and a higher value thereof means that the thermally conductive composition is softer. When the consistency of the thermally conductive composition falls within such a range, the thermally conductive composition has excellent flexibility.

The consistency can be measured by a method according to JIS K2220:2013, specifically, by the method described in Examples.

The thermally conductive composition of this embodiment has excellent storability (storage stability). Herein, the storability can be evaluated by the decrement of the hardness of a cured product of a thermally conductive composition after storage at room temperature (23°C ± 2°C) over a long period of time from the hardness of the cured product of the thermally conductive composition immediately after production (initial hardness), and when the thermally conductive composition shows a smaller hardness decrement, it is determined that the thermally conductive composition has better storability. The hardness decrement can be calculated by the following formula:

$$\text{Hardness decrement (\%)} = [(T_0 - T_m)/T_0] \times 100$$

wherein $T_0$ is the initial hardness of the cured product, and $T_m$ is the hardness of the cured product after the thermally conductive composition is stored at room temperature (23°C ± 2°C) for m days.

For example, the hardness decrement of the cured product of the thermally conductive composition after storage at room temperature (23°C ± 2°C) for 7 days is preferably 9.0% or less, more preferably 6.0% or less, further preferably 2.0% or less from the initial hardness of the cured product of the thermally conductive composition. The hardness decrement of the cured product of the thermally conductive composition after storage at room temperature (23°C ± 2°C) for 40 days is preferably 9.0% or less, more preferably 6.0% or less, further preferably 2.0% or less from the initial hardness of the cured product of the thermally conductive composition.

The storability can be measured specifically by the method described in Examples.

The thermally conductive composition of this embodiment can be suitably used for exothermic electronic devices such as electronic devices, personal computers, and automotive ECUs and batteries, since it has no darkening, low viscosity, and excellent storability, and can give a cured product and a shaped body with high thermal conductivity, appropriate hardness, and low volatile content.

[Cured product and shaped body of thermally conductive composition]

A shaped body of the thermally conductive composition of this embodiment of a desired shape can be obtained by known molding methods such as press molding, extrusion molding, injection molding, cast molding (pouring into a mold). A cured product of the thermally conductive composition of this embodiment can be obtained poured into a mold or the like, followed by drying, as required, and heating and curing. The drying may be performed at room temperature or may be natural drying. The heating is preferably performed at a temperature of 50°C or more and 150°C or less for 5 minutes or more and 20 hours or less, more preferably at a temperature of 60°C or more and 100°C or less for 10 minutes or more and 10 hours or less.

The cured product and the shaped body of the thermally conductive composition of this embodiment has a C

hardness of preferably 5 or more and 95 or less, more preferably 10 or more and 75 or less, further preferably 10 or more and 70 or less, as measured according to the hardness test (type C) of JIS K7312:1996.

The C hardness can be measured, specifically, by the method described in Examples.

The cured product and the shaped body of the thermally conductive composition of this embodiment has thermal conductivity of preferably 0.7 W/m.K or more, more preferably 1.0 W/m.K or more, further preferably 1.5 W/m.K or more.

The thermal conductivity can be measured by a method according to ISO20020-2, specifically, by the method described in Examples.

The brightness of the color of the cured product and the shaped body of the thermally conductive composition of this embodiment preferably has a Munsell value of N9.0 or more and N9.5 or less.

The Munsell value can be measured, specifically, by the method described in Examples.

The cured product and the shaped body of the thermally conductive composition of this embodiment preferably has a low volatile content. Herein, the volatile content can be evaluated by the weight loss of a cured product or a shaped body of the thermally conductive composition after exposure to a predetermined temperature for a predetermined time. When a thermally conductive composition shows a lower weight loss, it is determined that the thermally conductive composition to be a lower volatile content.

The weight loss is preferably less than 0.10%, more preferably 0.08% or less.

The weight loss can be measured, specifically, by the method described in Examples.

## Examples

Next, the present invention is specifically described below by way of Examples. However, the present invention is not limited at all by Examples below.

### [Synthesis Example 1: Production of silicon-containing oxide-coated aluminum nitride]

A vacuum desiccator was used that was made of acrylic resin with a plate thickness of 20 mm and internal dimensions of 260 mm × 260 mm × 100 mm and had a structure in which the inside was divided into two, the upper and lower spaces, with a partition having a through hole. 100 g of aluminum nitride (TFZ-N05P, available from TOYO ALUMINIUM K.K., particle size: 5 μm, specific surface area (BET method): 1.0 $m^2/g$) was spread uniformly on a stainless steel tray, and put and left standing in the upper space, and 30 g of 1,3,5,7-tetramethylcyclotetrasiloxane (available from Tokyo Chemical Industry Co., Ltd.) was put into a Petri dish made of glass, and put and left standing in the lower space. Thereafter, the vacuum desiccator was closed and heated in an oven at 80°C for 30 hours. The operation was performed while taking safety countermeasures such that the hydrogen gas generated by the reaction was released through a release valve attached to the vacuum desiccator. Then, the sample taken out of the desiccator was put into a crucible made of alumina, and the sample was heated at 700°C for 3 hours in the atmosphere, to obtain silicon-containing oxide-coated aluminum nitride. The coverage with the silicon-containing oxide film on the surface of the aluminum nitride was 74%, as determined by LEIS analysis.

### (Example 1)

### [Surface treatment 1: Surface treatment by chemical vapor deposition method]

A stainless steel container having an internal volume of 8 liters with a release valve was provided, and a triple mesh shelf that fit therein was provided. A glass Petri dish containing 30 g of decyltrimethoxysilane (KBM-3103C, available from Shin-Etsu Chemical Co., Ltd.) was placed on the bottom shelf, an aluminum container containing 100 g of the silicon-containing oxide-coated aluminum nitride obtained in Synthesis Example 1 was left standing on the top shelf, and the whole was housed in a stainless steel container having an internal volume of 8 liters. Thereafter, the container was sealed and heated in an oven at 150°C for 7.5 hours, to obtain silicon-containing oxide-coated aluminum nitride surface-treated with decyltrimethoxysilan by the chemical vapor deposition method (hereinafter also referred to as thermally conductive filler (1)). The operation was performed while taking safety countermeasures such that the alcohol generated by the reaction was released through a release valve attached to the stainless container.

### (Example 2)

### [Surface treatment 2: Surface treatment by chemical vapor deposition method]

Alumina AL160SG-4 (available from Showa Denko K.K., average particle size: 0.5 μm, specific surface area (BET method): 5.5 $m^2/g$) and CB-P05 (available from Showa Denko K.K., average particle size: 4 μm, specific surface

area (BET method): 0.7 $m^2/g$) as metal oxide powder, and ALUNABEADS (registered trademark) CB-P40 (available from Showa Denko K.K., average particle size: 40 μm, specific surface area (BET method): 0.2 $m^2/g$) and ALUNABEADS (registered trademark) CB-A100S (available from Showa Denko K.K., average particle size: 100 μm, specific surface area (BET method): 0.1 $m^2/g$) as metal oxide particles were provided. Then, they were put into a rotation/revolution mixer (available from THINKY CORPORATION) at a mass ratio of AL160SG-4:CB-P05:CB-P40:CB-A100S = 15:25:20:40, and mixed and stirred at a rotational speed of 2000 rpm for 30 seconds twice, to prepare A-sample (white).

Alumina (A-sample) surface-treated with decyltrimethoxysilane by the chemical vapor deposition method (hereinafter also referred to as thermally conductive filler (2)) was obtained in the same manner as in surface treatment 1, except that 100 g of A-sample was used instead of 100 g of the silicon-containing oxide-coated aluminum nitride obtained in Synthesis Example 1 in surface treatment 1.

(Example 3)

[Surface treatment 3: Surface treatment by chemical vapor deposition method]

Hexagonal crystal boron nitride surface-treated by the chemical vapor deposition method using decyltrimethoxysilane (hereinafter also referred to as thermally conductive filler (3)) was obtained in the same manner as in surface treatment 1, except that 100 g of hexagonal crystal boron nitride (1) (SHOBN (registered trademark) UHP-G1H (agglomerated hexagonal crystal boron nitride powder), available from Showa Denko K.K., average particle size: 100 μm) was used instead of 100 g of the silicon-containing oxide-coated aluminum nitride obtained in Synthesis Example 1 as ceramic powder granules in surface treatment 1.

(Example 4)

[Surface treatment 4: Surface treatment by chemical vapor deposition method]

Hexagonal crystal boron nitride surface-treated with decyltrimethoxysilane by the chemical vapor deposition method (hereinafter also referred to as thermally conductive filler (4)) was obtained in the same manner as in surface treatment 1, except that 100 g of hexagonal crystal boron nitride (2) (GBN-100 (agglomerated and sintered hexagonal crystal boron nitride powder), available from Shanghai-Hyakuzu K.K., average particle size: 100 μm) was used instead of 100 g of the silicon-containing oxide-coated aluminum nitride obtained in Synthesis Example 1 as ceramic powder granules in surface treatment 1.

(Example 5)

(1) Preparation of thermally conductive composition

20 mass% of silicone rubber (EG3100, available from Dow Toray Co., Ltd., viscosity: 320 mPa s) as a polymer component and 80 mass% of the thermally conductive filler (1) obtained in Example 1 as a thermally conductive filler were put into a rotation/revolution mixer (available from THINKY CORPORATION), and mixed and stirred at a rotational speed of 2000 rpm for 30 seconds. After the mixture obtained was cooled, the contents were loosened, and further mixed and stirred at a rotational speed of 2000 rpm for 30 seconds, to obtain a thermally conductive composition of Example 5.

(2) Sheet molding

On a 0.1-mm thick polyester film subjected to mold release treatment with silicone, the thermally conductive composition obtained in (1) above that had been defoamed was placed, and it was covered with a 0.1-mm thick polyester film without air incorporation, molded with a mill roll, cured at 100°C for 15 minutes, and allowed to stand at room temperature (23°C) for one day, to obtain a 2-mm thick sheet.

(Comparative Example 1)

A thermally conductive composition of Comparative Example 1 was obtained in the same manner as in Example 5, except that an untreated aluminum nitride (TFZ-N05P, available from TOYO ALUMINIUM K.K.) was used as a thermally conductive filler. Then, a sheet was produced in the same manner as in Example 5 by using the thermally conductive composition obtained, but such a thermally conductive composition did not cure.

(Comparative Example 2)

A thermally conductive composition of Comparative Example 2 was obtained in the same manner as in Example 5, except that the silicon-containing oxide-coated aluminum nitride obtained in Synthesis Example 1 was used as a thermally conductive filler. Then, a 2-mm thick sheet was produced in the same manner as in Example 5 by using the thermally conductive composition obtained.

(Comparative Example 3)

(1) Surface treatment by dry process

99.63 mass% of aluminum nitride (TFZ-N05P, available from TOYO ALUMINIUM K.K.) and 0.37 mass% of decyltrimethoxysilane (KBM-3103C, available from Shin-Etsu Chemical Co., Ltd.) were put into a rotation/revolution mixer (available from THINKY CORPORATION), and mixed and stirred at a rotational speed of 2000 rpm for 30 seconds 4 times. The mixture obtained was put into a stainless bat and dried at a temperature of 120°C for 2 hours using a hot air oven, to obtain surface-treated aluminum nitride.

(2) Preparation of thermally conductive composition and production of sheet

A thermally conductive composition of Comparative Example 3 was obtained in the same manner as in Example 5, except that an aluminum nitride surface-treated by the dry process of (1) above was used as a thermally conductive filler. Then, a 2-mm thick sheet was produced in the same manner as in Example 5 by using the thermally conductive composition obtained.

(Comparative Example 4)

(1) Surface treatment by dry process

95.79 mass% of the silicon-containing oxide-coated aluminum nitride obtained in Synthesis Example 1 and 4.21 mass% of decyltrimethoxysilane (KBM-3103C, available from Shin-Etsu Chemical Co., Ltd.) were put into a rotation/revolution mixer (available from THINKY CORPORATION), and mixed and stirred at a rotational speed of 2000 rpm for 30 seconds 4 times. The mixture obtained was put into a stainless bat and dried at a temperature of 120°C for 2 hours using a hot air oven, to obtain surface-treated silicon-containing oxide-coated aluminum nitride.

(2) Preparation of thermally conductive composition and production of sheet

A thermally conductive composition of Comparative Example 4 was obtained in the same manner as in Example 5, except that a silicon-containing oxide-coated aluminum nitride surface-treated by the dry process of (1) above was used as a thermally conductive filler. Then, a 2-mm thick sheet was produced in the same manner as in Example 5 by using the thermally conductive composition obtained.

(Comparative Example 5: Preparation of thermally conductive composition containing aluminum nitride surface-treated by integral blending method and production of sheet)

19.94 mass% of silicone rubber (EG3100, available from Dow Toray Co., Ltd.) as a polymer component and 0.30 mass% of decyltrimethoxysilane (KBM-3103C, available from Shin-Etsu Chemical Co., Ltd.) were put into a rotation/revolution mixer (available from THINKY CORPORATION), and mixed and stirred at a rotational speed of 2000 rpm for 30 seconds. Further, 79.76 mass% of aluminum nitride (TFZ-N05P, available from TOYO ALUMINIUM K.K.) was added to the mixture obtained, and the resultant was mixed and stirred at a rotational speed of 2000 rpm for 30 seconds twice, to obtain a thermally conductive composition of Comparative Example 5.

Then, a 2-mm thick sheet was produced in the same manner as in Example 5 by using the thermally conductive composition obtained.

(Comparative Example 6: Preparation of thermally conductive composition containing silicon-containing oxide-coated aluminum nitride surface-treated by integral blending method and production of sheet)

19.94 mass% of silicone rubber (EG3100, available from Dow Toray Co., Ltd.) as a polymer component and 0.30 mass% of decyltrimethoxysilane (KBM-3103C, available from Shin-Etsu Chemical Co., Ltd.) were put into a rotation/revolution mixer (available from THINKY CORPORATION), and mixed and stirred at a rotational speed of 2000 rpm for 30 seconds. Further, 79.76 mass% of the silicon-containing oxide-coated aluminum nitride obtained in Synthesis Example 1 was added to the mixture obtained, and the resultant was mixed and stirred at a rotational speed of 2000 rpm for 30 seconds twice, to obtain a thermally conductive composition of Comparative Example 6.

Then, a 2-mm thick sheet was produced in the same manner as in Example 5 by using the thermally conductive composition obtained.

<Evaluation items>

The properties of the thermally conductive composition and the sheet obtained in each of Example 5 and Comparative Examples 1 to 6 were measured in measurement conditions shown below. Table 1 shows the results.

(1) Viscosity

The viscosity of the thermally conductive composition obtained in each of Examples and Comparative Examples was measured according to JIS K7210:2014 using a flow viscometer (GFT-100EX, available from SHIMADZU CORPORATION) at a temperature of 30°C with a die hole diameter (diameter) of 1.0 mm under a test force of 40 (weight: 7.8 kg).

(2) Thermal conductivity

The 2-mm thick sheet obtained in each of Examples and Comparative Examples was cut into a strip shape with a width of 20 mm, and 3 pieces thereof were layered to form a block, which was used as a measurement sample. Using a thermophysical property measuring device (hot-disk method, TPS-2500S, available from Kyoto Electronics Manufacturing Co., Ltd.), the thermal conductivity of the measurement sample was measured according to ISO20020-2.

(3) Volatile content

The 2-mm thick sheet obtained in each of Examples and Comparative Examples was punched out into a cylindrical shape with a diameter of 30 mm with a punch, to give a measurement sample. The sample was placed on a wire screen and exposed in a hot air circulating oven at a temperature of 120°C for 72 hours. The weight loss was calculated from the initial weight (g) of the sample and the weight (g) of the sample after exposure by the following formula, to give a volatile content.

$$\text{Weight loss (\%)} = (\text{initial weight of sample} - \text{weight of sample after exposure})/\text{initial weight of sample} \times 100$$

(4) Storability

100 parts by mass of silicone rubber (EG3100A, available from Dow Toray Co., Ltd.) and 400 parts by mass of a thermally conductive filler were put into a rotation/revolution mixer (available from THINKY CORPORATION), and mixed and stirred at a rotational speed of 2000 rpm for 30 seconds. After the mixture obtained was cooled, the contents were loosened and further mixed and stirred at a rotational speed of 2000 rpm for 30 seconds, to give liquid A. Further, 100 parts by mass of silicone rubber (EG3100B, available from Dow Toray Co., Ltd.) and 400 parts by mass of a thermally conductive filler were put into a rotation/revolution mixer (available from THINKY CORPORATION), and mixed and stirred at a rotational speed of 2000 rpm for 30 seconds. After the mixture obtained was cooled, the contents were loosened and further mixed and stirred at a rotational speed of 2000 rpm for 30 seconds, to give liquid B. The liquid A and liquid B obtained were mixed at a mass ratio of liquid A: liquid B = 1:1 and stirred using a rotation/revolution mixer at a rotational speed of 2000 rpm for 30 seconds, to obtain a mixture.

On a 0.1-mm thick polyester film subjected to mold release treatment with silicone, the mixture defoamed was placed, and it was covered with a 0.1-mm thick polyester film without air incorporation, molded with a mill roll, and cured at 100°C for 15 minutes, to obtain a 2-mm thick sheet. The hardness of the sheet obtained was measured according to the hardness test (type C) of JIS K7312:1996 using an Asker C durometer (Asker C rubber durometer, available from KOBUNSHI KEIKI CO., LTD.), to give an initial hardness.

Further, a sheet was produced by using the solution A and solution B that had been allowed to stand at room temperature (23°C ± 2°C) for 7 days in the same manner as above, and the hardness of the sheet was measured, to give a hardness after 7 days. Further, a sheet was produced using the solution A and solution B that had been allowed

to stand at room temperature (23°C ± 2°C) for 40 days in the same manner as above, and the hardness of the sheet was measured, to give a hardness after 40 days.

Decrements of the hardness after 7 days and the hardness after 40 days from the initial hardness were calculated by the following formula. When a thermally conductive composition shows a smaller hardness decrement, it is determined that the thermally conductive composition has better storability.

$$\text{Hardness decrement (\%)} = [(T_0 - T_m)/T_0] \times 100$$

wherein $T_0$ is the initial hardness of the cured product, and $T_m$ is the hardness of the cured product after the thermally conductive composition is stored at room temperature (23°C ± 2°C) for m days.

(5) Hardness (C hardness)

The 2-mm thick sheet obtained in each of Examples and Comparative Examples was cut into a strip shape with a width of 20 mm, and 3 pieces thereof were layered to form a block, which was used as a measurement sample. The C hardness of the measurement sample was measured according to the hardness test (type C) of JIS K7312:1996 using an Asker C durometer (Asker C rubber durometer, available from KOBUNSHI KEIKI CO., LTD.).

(6) Color measurement

The brightness of the color of the 2-mm thick sheet obtained in each of Examples and Comparative Examples was evaluated by the Munsell color system.

(7) Consistency

The consistency was determined by the following procedure according to JIS K2220:2013 on a 1/4 scale.

The thermally conductive composition was put into a brass container for a sample. After the surface was flattened, a 1/4 cone was dropped on the thermally conductive composition at 25°C, and the penetration depth after 5 seconds was measured, to calculate the consistency by the following formula.

$$\text{Consistency} = 3.75 \times (\text{penetration depth (mm)} \times 10) + 24$$

Table 1

| | | Example 5 | Comparative Example 1 | Comparative Example 2 | Comparative Example 3 | Comparative Example 4 | Comparative Example 5 | Comparative Example 6 |
|---|---|---|---|---|---|---|---|---|
| Polymer component (mass%) | Silicone rubber | 20.00 | 20.00 | 20.00 | 20.00 | 20.00 | 19.94 | 19.94 |
| Thermally conductive filler (mass%) | Thermally conductive filler (1) | 80.00 | - | - | - | - | - | - |
| | Untreated aluminum nitride | - | 80.00 | - | - | - | 79.76 | - |
| | Silicon-containing oxide-coated aluminum nitride | - | - | 80.00 | - | - | - | 79.76 |
| | Aluminum nitride surface-treated by dry process | - | - | - | 80.00 | - | - | - |
| | Silicon-containing oxide-coated aluminum nitride surface-treated by dry process | - | - | - | - | 80.00 | - | - |
| Alkoxysilane (mass%) | Decyltrimethoxysilane | - | - | - | - | - | 0.30 | 0.30 |
| Viscosity [Pa-s] | | 4370 | 19000 | 38500 | 3800 | 4220 | 2500 | 3750 |
| Thermal conductivity [W/m·K] | | 1.85 | - | 1.83 | 1.73 | 1.87 | 1.73 | 1.85 |
| Volatile content [%] | | 0.05 | - | 0.05 | 0.06 | 0.06 | 0.10 | 0.10 |
| Storability | Initial hardness [-] | 48 | - | 44 | 31 | 44 | 30 | 42 |
| | Hardness (after 7 days) [-] | 48 | - | 44 | 28 | 38 | 25 | 39 |
| | Hardness (after 40 days) [-] | 48 | - | 43 | 28 | 37 | 25 | 39 |
| | Hardness decrement (after 7 days) [%] | 0 | - | 0 | 9.7 | 13.6 | 16.7 | 7.1 |
| | Hardness decrement (after 40 days) [%] | 0 | - | 2.3 | 9.7 | 15.9 | 16.7 | 7.1 |
| Surface treatment method | | CVD method | Untreated | Untreated | Dry process | Dry process | Integral blend method | Integral blend method |

The cured product of the thermally conductive composition of Example 5, which contained as a thermally conductive filler the silicon-containing oxide-coated aluminum nitride surface-treated with alkoxysilane having a specific structure by the chemical vapor deposition method, tended to have high thermal conductivity. Further, the thermally conductive composition had low viscosity, and the cured product thereof had appropriate hardness, good storability, and reduced volatile content.

In the thermally conductive composition containing the untreated aluminum nitride as a thermally conductive filler, curing was inhibited (Comparative Example 1), and in the thermally conductive composition containing the untreated silicon-containing oxide-coated aluminum nitride, the viscosity was as high as 38500 Pa s, although curing was not inhibited (Comparative Example 2). Further, the cured product of the thermally conductive composition containing the thermally conductive filler surface-treated by the dry process had reduced storability (Comparative Examples 3 and 4). Particularly in Comparative Example 4, it was considered that stirring caused friction between the silicon-containing oxide-coated aluminum nitride particles in the surface treatment by the dry process to allow the silicon-containing oxide film to peel off from the aluminum nitride, resulting in a reduced storability. The thermally conductive composition containing the thermally conductive filler surface-treated by the integral blending method had low viscosity; however, a large volatile content due to unreacted alkoxysilane remaining, and slight foaming was seen on the sheet surface (Comparative Examples 5 and 6). Further, Comparative Example 5, in which the untreated aluminum nitride was used, had a large reduction in storability. Comparative Example 6, in which the untreated silicon-containing oxide-coated aluminum nitride was used, had a smaller reduction in storability as compared with in Comparative Example 5, which is probably due to the silicon-containing oxide film.

The viscosity of the thermally conductive composition tends to decrease when a thermally conductive filler surface-treated with alkoxysilane is used.

(Example 6)

4.76 mass% of silicone rubber (EG3100, available from Dow Toray Co., Ltd.) as a polymer component and 95.24 mass% of the thermally conductive filler (2) obtained in Example 2 as a thermally conductive filler were put into a rotation/revolution mixer (available from THINKY CORPORATION), and mixed and stirred at a rotational speed of 2000 rpm for 30 seconds. After the mixture obtained was cooled, the contents were loosened, and further mixed and stirred at a rotational speed of 2000 rpm for 30 seconds, to obtain a thermally conductive composition of Example 6. Then, a 2-mm thick sheet was produced in the same manner as in Example 5 using the thermally conductive composition obtained.

(Comparative Example 7)

4.76 mass% of silicone rubber (EG3100, available from Dow Toray Co., Ltd.) as a polymer component and 95.24 mass% of untreated A-sample (alumina) as a thermally conductive filler were put into a rotation/revolution mixer (available from THINKY CORPORATION), and mixed and stirred at a rotational speed of 2000 rpm for 30 seconds. However, it was impossible to fill the silicone rubber with alumina, to thereby fail to obtain the thermally conductive composition of Comparative Example 7. Therefore, the evaluation shown in Table 2 was not performed for Comparative Example 7.

(Comparative Example 8: Preparation of thermally conductive composition containing alumina (A-sample) surface-treated by integral blending method and production of sheet)

4.72 mass% of silicone rubber (EG3100, available from Dow Toray Co., Ltd.) as a polymer component and 0.94 mass% of decyltrimethoxysilane (KBM-3103C, available from Shin-Etsu Chemical Co., Ltd.) were put into a rotation/revolution mixer (available from THINKY CORPORATION), and mixed and stirred at a rotational speed of 2000 rpm for 30 seconds. Further, 94.34 mass% of A-sample (alumina) was added to the mixture obtained, and the resultant was mixed and stirred at a rotational speed of 2000 rpm for 30 seconds twice, to obtain a thermally conductive composition of Comparative Example 8. Then, a 2-mm thick sheet was produced in the same manner as in Example 5 by using the thermally conductive composition obtained. Foaming was seen on the surface of the sheet obtained.

(Comparative Example 9)

(1) Surface treatment by dry process

While 1.0 mass% of decyltrimethoxysilane (KBM-3103C, available from Shin-Etsu Chemical Co., Ltd.) was added dropwise to 99.0 mass% of alumina (A-sample), the resulting mixture was mixed and stirred at a rotational speed

of 1200 rpm for 30 minutes using a Henschel mixer (available from Mitsui Miike Machinery Co., Ltd.). The mixture obtained was put into a stainless bat and dried at a temperature of 120°C for 2 hours using a hot air oven, to obtain surface-treated alumina (A-sample).

(2) Preparation of thermally conductive composition and production of sheet

A thermally conductive composition of Comparative Example 9 was obtained in the same manner as in Example 5, except that an alumina (A-sample) surface-treated by the dry process of (1) above was used as a thermally conductive filler. Then, a 2-mm thick sheet was produced in the same manner as in Example 5 by using the thermally conductive composition obtained.

The properties of the thermally conductive composition and sheet obtained in each of Example 6 and Comparative Examples 7 to 9 were measured using the aforementioned measurement methods. Table 2 shows the results.

Table 2

| | | Example 6 | Comparative Example 7 | Comparative Example 8 | Comparative Example 9 |
|---|---|---|---|---|---|
| Polymer component (mass%) | Silicone rubber | 4.76 | 4.76 | 4.72 | 4.76 |
| Thermally conductive filler (mass%) | Thermally conductive filler (2) | 95.24 | - | - | - |
| | Untreated A-sample (Alumina) | - | 95.24 | 94.34 | - |
| | Alumina surface-treated by dry process | - | - | - | 95.24 |
| Alkoxysilane (mass%) | Decyltrimethoxysilane | - | - | 0.94 | - |
| Viscosity [Pa-s] | | 2150 | - | 102 | 102 |
| Hardness (Asker C) [-] | | 69 | - | 31 | 50 |
| Thermal conductivity [W/m·K] | | 5.03 | - | 4.89 | 5.05 |
| Volatile content [%] | | 0.09 | - | 0.60 | 0.48 |
| Color measurement (Munsell color system) | | N9.0 | - | N9.0 | N7.0 |
| Surface treatment method | | CVD method | Untreated | Integral blend method | Dry process |

The cured product of the thermally conductive composition containing alumina (metal oxide particles) surface-treated with alkoxysilane having a specific structure by the chemical vapor deposition method as a thermally conductive filler had high thermal conductivity, low volatile content, white color without color change, and good balance (Example 6). Further, since the filler surface was a monolayer of silane, compatibility with the polymer was also reduced, resulting in higher hardness.

When untreated alumina was used as a thermally conductive filler, it was impossible to fill the polymer component even with the alumina. Therefore, it was impossible to measure the viscosity for Comparative Example 7. Further, the thermally conductive composition containing alumina surface-treated by the integral blending method had foam seen on the surface although it was cured (Comparative Example 8). This is probably because unreacted alkoxysilane volatilized. Further, in Comparative Example 9, in which alumina was surface-treated by the dry process, it is considered that the alumina was worn and darkened due to the friction between the mixing device and the alumina during the surface treatment step, and that the cured product also was thus discolored into gray.

(Example 7)

41.70 mass% of silicone rubber (EG3100, available from Dow Toray Co., Ltd.) as a polymer component, 12.49 mass% of hexagonal crystal boron nitride (3) (SHOBN (registered trademark) UHP-S2, available from Showa Denko

K.K., average particle size: 0.9 μm) as a thermally conductive filler, and 16.66 mass% of hexagonal crystal boron nitride (4) (SHOBN (registered trademark) UHP-1K, available from Showa Denko K.K., average particle size: 8.5 μm) were put into a rotation/revolution mixer (available from THINKY CORPORATION), and mixed and stirred at a rotational speed of 2000 rpm for 30 seconds. After the mixture obtained was cooled, 29.15 mass% of the thermally conductive filler (3) obtained in Example 3 was further added, and the resultant was mixed and stirred at a rotational speed of 2000 rpm for 30 seconds, to obtain a thermally conductive composition of Example 7. Then, a 2-mm thick sheet was produced in the same manner as in Example 5 by using the thermally conductive composition obtained.

(Example 8)

A thermally conductive composition of Example 8 was obtained in the same manner as in Example 7, except that the thermally conductive filler (4) obtained in Example 4 was used instead of the thermally conductive filler (3) obtained in Example 3. Then, a 2-mm thick sheet was produced in the same manner as in Example 5 by using the thermally conductive composition obtained.

(Comparative Example 10)

A thermally conductive composition of Comparative Example 10 was obtained in the same manner as in Example 7, except that untreated hexagonal crystal boron nitride (1) (SHOBN (registered trademark) UHP-G1H, available from Showa Denko K.K.) was used instead of the thermally conductive filler (3) obtained in Example 3. Then, a 2-mm thick sheet was produced in the same manner as in Example 5 by using the thermally conductive composition obtained.

(Comparative Example 11)

A thermally conductive composition of Comparative Example 11 was obtained in the same manner as in Example 7, except that untreated hexagonal crystal boron nitride (2) (GBN-100, available from Shanghai-Hyakuzu K.K.) was used instead of the thermally conductive filler (3) obtained in Example 3. Then, a 2-mm thick sheet was produced in the same manner as in Example 5 by using the thermally conductive composition obtained.

(Comparative Example 12)

(1) Surface treatment by dry process

98.68 mass% of hexagonal crystal boron nitride (1) (SHOBN (registered trademark) UHP-G1H, available from Showa Denko K.K.), and 1.32 mass% of decyltrimethoxysilane (KBM-3103C, available from Shin-Etsu Chemical Co., Ltd.) were put into a rotation/revolution mixer (available from THINKY CORPORATION), and mixed and stirred at a rotational speed of 2000 rpm for 30 seconds 4 times. The mixture obtained was put into a stainless bat and dried at a temperature of 120°C for 2 hours using a hot air oven, to obtain surface-treated hexagonal crystal boron nitride.

(2) Preparation of thermally conductive composition and production of sheet

A thermally conductive composition of Comparative Example 12 was obtained in the same manner as in Example 7, except that hexagonal crystal boron nitride surface-treated by the dry process of (1) above was used instead of the thermally conductive filler (3) obtained in Example 3. Then, a 2-mm thick sheet was produced in the same manner as in Example 5 by using the thermally conductive composition obtained.

(Comparative Example 13)

(1) Surface treatment by dry process

99.33 mass% of hexagonal crystal boron nitride (2) (GBN-100, available from Shanghai-Hyakuzu K.K.) and 0.67 mass% of decyltrimethoxysilane (KBM-3103C, available from Shin-Etsu Chemical Co., Ltd.) were put into a rotation/revolution mixer (available from THINKY CORPORATION), and mixed and stirred at a rotational speed of 2000 rpm for 30 seconds 4 times. The mixture obtained was put into a stainless bat and dried at a temperature of 120°C for 2 hours using a hot air oven, to obtain surface-treated hexagonal crystal boron nitride.

(2) Preparation of thermally conductive composition and production of sheet

A thermally conductive composition of Comparative Example 13 was obtained in the same manner as in Example 7, except that hexagonal crystal boron nitride surface-treated by the dry process of (1) above was used instead of the thermally conductive filler (3) obtained in Example 3. Then, a 2-mm thick sheet was produced in the same manner as in Example 5 by using the thermally conductive composition obtained.

(Comparative Example 14: Preparation of thermally conductive composition containing hexagonal crystal boron nitride surface-treated by integral blending method and production of sheet)

41.50 mass% of silicone rubber (EG3100, available from Dow Toray Co., Ltd.) as a polymer component, 12.45 mass% of hexagonal crystal boron nitride (3) (SHOBN (registered trademark) UHP-S2, available from Showa Denko K.K.) as a thermally conductive filler, and 16.60 mass% of hexagonal crystal boron nitride (4) (SHOBN (registered trademark) UHP-1K, available from Showa Denko K.K.) were put into a rotation/revolution mixer (available from THINKY CORPORATION), and mixed and stirred at a rotational speed of 2000 rpm for 30 seconds. Then, 0.40 mass% of decyltrimethoxysilane (KBM-3103C, available from Shin-Etsu Chemical Co., Ltd.) was added to the mixture obtained, and the resultant was mixed and stirred at a rotational speed of 2000 rpm for 30 seconds. After cooling, 29.05 mass% of hexagonal crystal boron nitride (1) (SHOBN (registered trademark) UHP-G1H, available from Showa Denko K.K.) as a thermally conductive filler was further added, and the resultant was mixed and stirred at a rotational speed of 2000 rpm for 30 seconds, to obtain a thermally conductive composition of Comparative Example 14.

Then, a 2-mm thick sheet was produced in the same manner as in Example 5 by using the thermally conductive composition obtained.

(Comparative Example 15: Preparation of thermally conductive composition containing hexagonal crystal boron nitride surface-treated by integral blending method and production of sheet)

41.60 mass% of silicone rubber (EG3100, available from Dow Toray Co., Ltd.) as a polymer component, 12.47 mass% of hexagonal crystal boron nitride (3) (SHOBN (registered trademark) UHP-S2, available from Showa Denko K.K.) as a thermally conductive filler, and 16.63 mass% of hexagonal crystal boron nitride (4) (SHOBN (registered trademark) UHP-1K, available from Showa Denko K.K.) were put into a rotation/revolution mixer (available from THINKY CORPORATION), and mixed and stirred at a rotational speed of 2000 rpm for 30 seconds. Then, 0.20 mass% of decyltrimethoxysilane (KBM-3103C, available from Shin-Etsu Chemical Co., Ltd.) was added to the mixture obtained, and the resultant was mixed and stirred at a rotational speed of 2000 rpm for 30 seconds. After cooling, 29.10 mass% of hexagonal crystal boron nitride (2) (GBN-100, available from Shanghai-Hyakuzu K.K.) as a thermally conductive filler was further added, and the resultant was mixed and stirred at a rotational speed of 2000 rpm for 30 seconds, to obtain a thermally conductive composition of Comparative Example 15.

Then, a 2-mm thick sheet was produced in the same manner as in Example 5 by using the thermally conductive composition obtained.

The properties of the thermally conductive composition obtained in each of Examples 7 and 8 and Comparative Examples 10 to 15 were measured using the aforementioned measurement method. Table 3 shows the results.

Table 3

| | | Example 7 | Example 8 | Comparative Example 10 | Comparative Example 11 | Comparative Example 12 | Comparative Example 13 | Comparative Example 14 | Comparative Example 15 |
|---|---|---|---|---|---|---|---|---|---|
| Polymer component (mass%) | Silicone rubber | 41.70 | 41.70 | 41.70 | 41.70 | 41.70 | 41.70 | 41.50 | 41.60 |
| Thermally conductive filler (mass%) | Thermally conductive filler (3) | 29.15 | - | - | - | - | - | - | - |
| | Thermally conductive filler (4) | - | 29.15 | - | - | - | - | - | - |
| | Hexagonal crystal boron nitride (1) | - | - | 29.15 | - | - | - | 29.05 | - |
| | Hexagonal crystal boron nitride (2) | - | - | | 29.15 | - | - | - | 29.10 |
| | Hexagonal crystal boron nitride (3) | 12.49 | 12.49 | 12.49 | 12.49 | 12.49 | 12.49 | 12.45 | 12.47 |
| | Hexagonal crystal boron nitride (4) | 16.66 | 16.66 | 16.66 | 16.66 | 16.66 | 16.66 | 16.60 | 16.63 |
| | Hexagonal crystal boron nitride surface-treated by dry process (1) | - | - | - | - | 29.15 | - | - | - |
| | Hexagonal crystal boron nitride surface-treated by dry process (2) | - | - | - | - | - | 29.15 | - | - |
| Alkoxysilane (mass%) | Decyltrimethoxysilane | - | - | - | - | - | - | 0.40 | 0.20 |
| Viscosity [Pa-s] | | 85 | 87 | 85 | 92 | 84 | 85 | 87 | 84 |
| Consistency | | 202 | 59 | 184 | 59 | 218 | 108 | 235 | 52 |
| Hardness (Asker C) [-] | | 21 | 73 | 25 | 75 | 21 | 60 | 20 | 71 |
| Thermal conductivity [W/m·K] | | 1.80 | 4.60 | 1.78 | 4.59 | 1.69 | 3.03 | 1.78 | 4.62 |
| Volatile content [%] | | 0.10 | 0.03 | 0.06 | 0.03 | 0.05 | 0.04 | 0.19 | 0.09 |

(continued)

| | | Example 7 | Example 8 | Comparative Example 10 | Comparative Example 11 | Comparative Example 12 | Comparative Example 13 | Comparative Example 14 | Comparative Example 15 |
|---|---|---|---|---|---|---|---|---|---|
| Surface treatment method | | CVD method | CVD method | Untreated | Untreated | Dry process | Dry process | Integral blend method | Integral blend method |

The thermally conductive composition containing hexagonal crystal boron nitride (ceramic powder granules) surface-treated with alkoxysilane having a specific structure by the chemical vapor deposition method as a thermally conductive filler had low viscosity and high consistency, and the cured product thereof had high thermal conductivity, appropriate hardness, low volatile content, and good balance (as compared with Examples 7 and 8, and Comparative Examples 10 to 15).

In the surface treatment of ceramic powder granules, the dry process includes the step of stirring ceramic powder granules only, and thus the cured product of the thermally conductive composition had reduced thermal conductivity (Comparative Examples 12 and 13). This is probably because the stirring causes friction between the ceramic powder granules, thereby causing the granules to collapse. Generally, the thermal conductivity of the composition increases when the composition contains a filler with large particle size.

## Claims

1. A method for producing a surface-treated thermally conductive filler, the method comprising:

   treating a surface of a thermally conductive filler with an alkoxysilane represented by formula (I) below by the chemical vapor deposition method:

   $$R^1_a{-}Si{-}(OR^2)_{4-a} \quad (I)$$

   wherein $R^1$ is each independently an unsubstituted or substituted organic group, $R^2$ is each independently an alkyl group having 1 to 4 carbon atoms,
   in the case where there are a plurality of $R^1$ or $R^2$, the plurality of $R^1$ or the plurality of $R^2$ are the same or different, and
   a represents an integer of 1 to 3.

2. The method for producing a surface-treated thermally conductive filler according to claim 1, wherein
   the organic group $R^1$ is an alkyl group having 1 to 12 carbon atoms, an alkenyl group having 2 to 18 carbon atoms, or an aryl group having 6 to 14 carbon atoms.

3. The method for producing a surface-treated thermally conductive filler according to claim 1 or 2, wherein
   the thermally conductive filler is at least one selected from the group consisting of silicon-containing oxide-coated nitride, metal oxide particles, and ceramic powder granules.

4. The method for producing a surface-treated thermally conductive filler according to any one of claims 1 to 3, wherein
   the chemical vapor deposition method is performed at a temperature of 80°C or more and 200°C or less.

5. A thermally conductive composition comprising a polymer component and a thermally conductive filler surface-treated with an alkoxysilane represented by formula (I) below by the chemical vapor deposition method:

   $$R^1_a{-}Si{-}(OR^2)_{4-a} \quad (I)$$

   wherein $R^1$ is each independently an unsubstituted or substituted organic group, $R^2$ is each independently an alkyl group having 1 to 4 carbon atoms,
   in the case where there are a plurality of $R^1$ or $R^2$, the plurality of $R^1$ or the plurality of $R^2$ are the same or different, and
   a represents an integer of 1 to 3.

6. The thermally conductive composition according to claim 5, wherein
   the organic group of $R^1$ is an alkyl group having 1 to 12 carbon atoms, an alkenyl group having 2 to 18 carbon atoms, or an aryl group having 6 to 14 carbon atoms.

7. The thermally conductive composition according to claim 5 or 6, wherein

the thermally conductive filler is at least one selected from the group consisting of silicon-containing oxide-coated nitride, metal oxide particles, and ceramic powder granules.

**8.** The thermally conductive composition according to claim 7, wherein
the thermally conductive filler is silicon-containing oxide-coated nitride.

**9.** The thermally conductive composition according to any one of claims 5 to 8, wherein
the polymer component is at least one selected from the group consisting of silicone rubber, acrylic rubber, polyurethane rubber, epoxy resin, polyimide, butyl rubber, silicone-modified acrylic resin, silicone-modified polyurethane, silicone-modified epoxy resin, and silicone-modified polyimide.

**10.** The thermally conductive composition according to any one of claims 5 to 9, wherein
the thermally conductive composition has a content of the polymer component of 1 mass% or more and 80 mass% or less, and a content of the thermally conductive filler of 20 mass% or more and 99 mass% or less, with respect to the total amount of the thermally conductive composition.

**11.** A cured product of the thermally conductive composition according to any one of claims 5 to 10.

**12.** A shaped body consisting of the thermally conductive composition according to any one of claims 5 to 10.

**13.** The thermally conductive composition according to any one of claims 5 to 10, wherein
a cured product of the thermally conductive composition after storage at room temperature (23°C $\pm$ 2°C) for 7 days has a hardness decrement of 9.0% or less from the initial hardness of the cured product of the thermally conductive composition.

## INTERNATIONAL SEARCH REPORT

International application No. **PCT/JP2021/036561**

**A. CLASSIFICATION OF SUBJECT MATTER**

***C09C 3/12***(2006.01)i; ***H01L 23/373***(2006.01)i; ***C08K 9/06***(2006.01)i; ***C08L 101/00***(2006.01)i; ***C09K 3/00***(2006.01)i; ***C09K 5/14***(2006.01)i
FI: C09K5/14 E; C08K9/06; C09C3/12; C09K3/00 R; H01L23/36 M; C08L101/00

According to International Patent Classification (IPC) or to both national classification and IPC

**B. FIELDS SEARCHED**

Minimum documentation searched (classification system followed by classification symbols)

C09C3/12; H01L23/373; C08K9/06; C08L101/00; C09K3/00; C09K5/14

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/194160 A1 (DIC CORP.) 10 October 2019 (2019-10-10) claims, paragraphs [0066]-[0067], [0073]-[0083], examples 5-8 | 1-7, 9-13 |
| Y | | 2, 6 |
| A | | 8 |
| X | JP 2002-53736 A (DENKI KAGAKU KOGYO K. K.) 19 February 2002 (2002-02-19) claims, examples 1-4 | 1, 4-5, 9-13 |
| Y | | 2, 6 |
| A | | 3, 7-8 |
| X | JP 2019-39063 A (SUMITOMO METAL MINING CO., LTD.) 14 March 2019 (2019-03-14) claims, paragraphs [0038]-[0039], example 3 | 1-7, 10 |
| A | | 8-9, 11-13 |
| A | JP 8-183875 A (OTSUKA CHEM. CO., LTD.) 16 July 1996 (1996-07-16) | 1-13 |
| A | WO 2020/040309 A1 (SHOWA DENKO K. K.) 27 February 2020 (2020-02-27) | 1-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 November 2021** | **30 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/036561**

**C. DOCUMENTS CONSIDERED TO BE RELEVANT**

| Category* | Citation of document, with indication, where appropriate, of the relevant passages | Relevant to claim No. |
|---|---|---|
| A | JP 7-315813 A (SHIN ETSU CHEM. CO., LTD.) 05 December 1995 (1995-12-05) | 1-13 |

Form PCT/ISA/210 (second sheet) (January 2015)

**INTERNATIONAL SEARCH REPORT**
**Information on patent family members**

International application No.
**PCT/JP2021/036561**

| Patent document cited in search report | Publication date (day/month/year) | Patent family member(s) | Publication date (day/month/year) |
|---|---|---|---|
| WO 2019/194160 A1 | 10 October 2019 | TW 201942239 A | |
| JP 2002-53736 A | 19 February 2002 | (Family: none) | |
| JP 2019-39063 A | 14 March 2019 | (Family: none) | |
| JP 8-183875 A | 16 July 1996 | (Family: none) | |
| WO 2020/040309 A1 | 27 February 2020 | EP 3842383 A1 | |
| JP 7-315813 A | 05 December 1995 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11209618 A

### Non-patent literature cited in the description


- Development of fine particle adsorbents by surface treatment, Aichi Center for Industry and Science Technology. *Research Report,* 2012
- Development research of biomass plastic composite materials having excellent thermal and mechanical properties (part 3). Research Report No.7. Gifu Prefectural Industrial Technology Center, 2013
- Water-repellent processing of textiles by self-assembled monolayer (SAM) formation technology. Research Report. Aichi Center for Industry and Science Technology, 2012
- *The TRC News 201610-04,* October 2016